Europäisches Patentamt

European Patent Office

Office européen des brevets

(11) Veröffentlichungsnummer: **0 158 003**
**A1**

(12) ## EUROPÄISCHE PATENTANMELDUNG

(21) Anmeldenummer: 85100241.0

(22) Anmeldetag: 11.01.85

(51) Int. Cl.⁴: **G 01 N 30/36**

(30) Priorität: 13.01.84 DE 3401059

(43) Veröffentlichungstag der Anmeldung:
16.10.85 Patentblatt 85/42

(84) Benannte Vertragsstaaten:
AT BE CH DE FR GB IT LI NL SE

(71) Anmelder: Gesellschaft für Biotechnologische
Forschung mbH (GBF)
Mascheroder Weg 1
D-3300 Braunschweig-Stöckheim(DE)

(72) Erfinder: Blöcker, Helmut, Dr. Dipl.-Chem.
Schinkelstrasse 6
D-2000 Hamburg(DE)

(72) Erfinder: Rohwedder, Karl, Dipl.-Ing.
Kannengiesserstrasse 3
D-3300 Braunschweig(DE)

(72) Erfinder: Henning, Klaus-Dieter, Dipl.-Ing.
Huttenstrasse 16
D-3300 Braunschweig(DE)

(74) Vertreter: Boeters, Hans Dietrich, Dr. et al,
Boeters, Bauer & Partner Thomas-Wimmer-Ring 14
D-8000 München 22(DE)

(54) **Anordnung zur chemischen Analyse und Synthese.**

(57) Die zur Durchführung von Analyse- und Syntheseprozessen vorgeschlagene Anordnung weist einen für eine Vielzahl von HPLC-Systemen (SYA,SYS) gemeinsame Steuereinheit (PR) auf, die über eine Steuereinrichtung (ST) Zugriff zu den einzelnen Systemen (SYA,SYS) erhält; durch Einstellung und Überwachung der einzelnen Aggregate der Systeme (SYA,SYS) über Steuer- und Meldeleitungen (SL,ML), können die Systeme als Analyse- und/oder als Synthesesysteme, vorzugsweise zur DNA- oder Peptidsynthese eingesetzt werden; die Durchführung von Analyse- und/oder Syntheseprozessen in den Systemen (SYA,SYS) geschieht dabei simultan; die Systeme (SYA,SYS) können in einem gemeinsamen Säulenofen betrieben werden.

Fig. 1

EP 0 158 003 A1

**BOETERS, BAUER & PARTNER**
PATENTANWÄLTE
EUROPEAN PATENT ATTORNEYS

THOMAS-WIMMER-RING 14
D-8000 MÜNCHEN 22

0158003

PA● BOETERS, BAUER & PARTNER
THOMAS-WIMMER-RING 14, D-8000 MÜNCHEN 22

DIPL.-CHEM. DR. HANS D. BOETERS
DIPL.-ING. ROBERT BAUER
MÜNCHEN

DIPL.-ING. VINCENZ v. RAFFAY
DIPL.-CHEM. DR. THOMAS FLECK
HAMBURG

TELEFON: (089) 22 00 92
TELEX: 5 24 878 rrm
TELEGRAMME: PROVENTION, MÜNCHEN

Anmelderin: Gesellschaft für Biotechnologische
Forschung mbH (GBF)

## Anordnung zur chemischen Analyse und Synthese

Die Erfindung betrifft eine Anordnung zur chemischen Analyse und Synthese in säulenförmigen Reaktionseinrichtungen gemäß dem Oberbegriff des Patentanspruches 1.

Der Einsatz säulenförmiger Reaktionseinrichtungen ist vor allem durch das sogenannte HPLC (High Pressure Liquid Chromatography)-Verfahren bekannt geworden. Dieses aus der Säulenchromatografie entwickelte Verfahren wird vorwiegend zur schnellen Auftrennung von Substanzgemischen verwendet. Hierbei wird die Trennleistung eines in einer Säule befindlichen porösen Materials (stationäre Phase) ausgenützt. Im Prinzip geschieht das in der Weise, daß die Reaktionslösung, im folgenden als mobile Phase bezeichnet, über eine Pumpenanordnung und ein Injektionssystem in die Reaktionseinrichtung, d.h. in die Säule gefördert wird. Da die Zusammensetzung der mobilen Phase zur Durchführung eines Prozesses variierbar sein muß, ist der Pumpenanordnung ein Ventilsystem vorgeschaltet. Die Pumpenaordnung und das Ventilsystem sind in diesem Fall über ein Kontrollgerät steuerbar. Derartige Vorrichtungen

- 2 -

sind in erster Linie als Analyseapparate eingesetzt.
HPLC-Systeme sind aber auch für Syntheseprozesse einsetzbar. Bekanntlich werden molekulare Ketten, z.B. Oligonukleotide in der sog. heterogenen Phase an Polymeren synthetisiert, wobei sich der polymere Träger zumeist in Faser- oder Kugelform in den säulenförmigen Reaktionseinrichtungen befindet.

Mit einer oben beschriebenen HPLC-Systemanordnung lassen
sich jedoch jeweils nur einzelne bestimmte Prozesse
durchführen. Selbst dabei sind die festsetzbaren Bedingungen oftmals nicht ausreichend, da die Speicherfähigkeit eines üblicherweise eingesetzten Kontrollgerätes begrenzt ist.

Aufgabe der Erfindung ist es, eine Anordnung anzugeben, die es ermöglicht, mehrere
Prozesse, also auch Analyse- und Syntheseprozesse simultan und unabhängig voneinander zu steuern, wobei zugleich
auch eine freie Konfiguration der einzelnen Systeme möglich ist, und mit der außerdem neben der Steuerung der
Prozesse auch eine Auswertung, z.B. eine numerische Auswertung oder die Entwicklung anderer Bedingungen durchführbar ist. Diese Aufgabe wird gemäß den kennzeichnenden
Merkmalen des Patentanspruches 1 gelöst.

Ausgestaltungen der Erfindung sind in den Unteransprüchen
gekennzeichnet.

Die mit der Erfindung verbundenen Vorteile bestehen im
wesentlichen in der Steuerung mehrerer, gleichzeitig und
unabhängig voneinander ablaufender Prozesse, in einer
Verbesserung hinsichtlich der Konfigurierbarkeit der Systeme und in einer Entlastung des in der Regel durch einen Mikrocomputer realisierten zentralen Steuerteiles.

Die Erfindung wird im folgenden anhand der Zeichnungen erläutert. Dort zeigen

Fig. 1 eine Anordnung nach dem Stand der Technik,
Fig. 2 ein erstes Ausführungsbeispiel,
Fig. 3 ein zweites Ausführungsbeispiel nach der Erfindung und
Fig. 4 ein Beispiel für eine variable Systemkonfiguration.

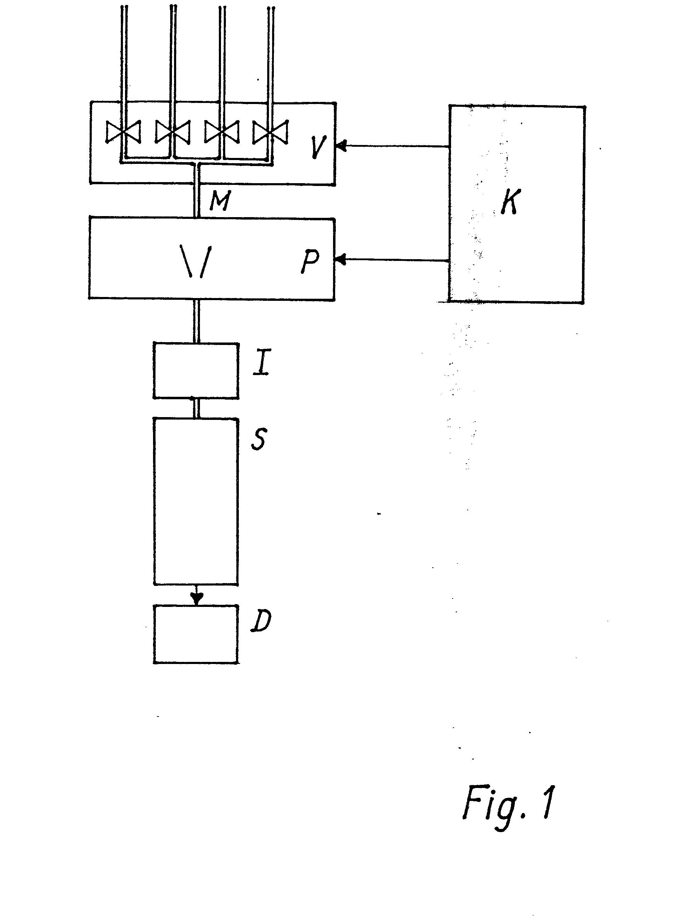

Die in Fig. 1 vereinfacht in Blockform dargestellte Anordnung für ein HPLC-System weist vier Zuführungen für die mobile Phase M auf. Über eine Ventilanordnung V mit vier Ventilen sind die Zuführungen mit einer Pumpe P verbunden. Diese steht über ein Injektionssystem I mit der säulenförmigen Reaktionseinrichtung S in Verbindung. Die Steuerung der einzelnen Ventile in der Ventilanordnung V sowie die Steuerung der Pumpe P erfolgt über das Kontrollgerät K. Dieses kann ein Mikrocomputer sein, der die für einen Syntheseprozeß vorgesehenen Abläufe steuert. Praktisch bedeutet das, daß die Einstellung und die Überwachung der Ventile und der Pumpenparameter durch das Kontrollgerät K programmgesteuert erfolgt. Eine der Reaktionseinrichtung S zugeordnete Detektoreinrichtung D ermittelt aktuelle Meßergebnisse und stellt entsprechende Signale zur Verfügung.

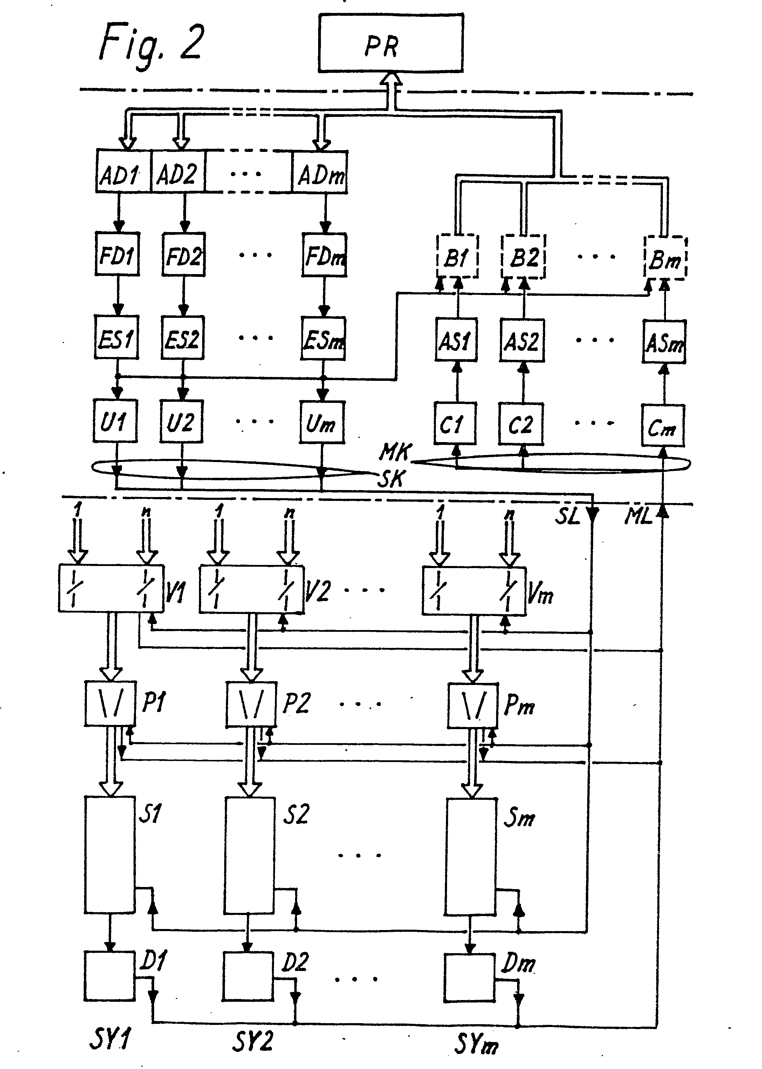

Fig. 2 zeigt ein Ausführungsbeispiel nach der Erfindung zur Durchführung von Analyseprozessen, mit dem m Systeme SY1 bis SYm simultan und unabhängig voneinander steuerbar sind. Die einzelnen Systeme SY1 bis SYm sind ähnlich aufgebaut, wie das anhand von Fig. 1 beschriebene System. Jedes System SY1 bis SYm besteht aus einer Ventilanordnung V1 bis Vm mit jeweils n Ventilen für die n Zuführungen zur Zusammensetzung der mobilen Phase M. Die Ventilanordnung kann z.B. durch ein sogenanntes Multipositionsventil realisiert sein. Über jweils eine Pumpe P1 bis Pm ist jeweils eine Ventilanordnung V1 bis Vm mit einer entsprechenden Reaktionseinrichtung S1 bis Sm verbunden.

Ein wesentlicher Bestandteil der Anordnung ist die Steuereinrichtung ST. Diese übernimmt entsprechende Informationen, nämlich Adreß- und Steuerinformationen von einer zentralen Steuereinheit PR, die durch einen an sich bekannten Mikrocomputer realisiert sein kann. In umgekehrter Richtung übergibt die Steuereinrichtung ST Informationen, im wesentlichen Meldeinformationen, an die zentrale Steuereinheit PR. Die Steuereinrichtung ST ist modular aufgebaut und kann deshalb ohne nennenswerten Aufwand an verschiedene Systemkonfigurationen angepaßt werden. So kann die Anordnung sowohl zur Durchführung von Analyseprozessen als auch zur Durchführung von Syntheseprozessen, vorzugsweise für eine DNA-Synthese bzw. eine Peptid-Synthese eingesetzt werden.

Zur Aufnahme und Bewertung der zu übernehmenden Informationen, also in ankommender Richtung, weist die Steuereinrichtung ST Adreßbewerter AD1 bis ADm in Form von Adreßdekodierern auf; weiterhin enthält die Steuereinrichtung ST diesen nachgeschaltete, den einzelnen Systemen SY1 bis SYm zugeordnete Funktionsdekodierer FD1 bis FDm, Eingabespeicher ES1 bis ESm und Umsetzerschaltungen U1 bis Um. In abgehender Richtung sind den einzelnen Systemen SY1 bis SYm zugeordnete Kodierer C1 bis Cm und Ausgabespeicher AS1 bis ASm vorhanden. Die Verbindungen zwischen den einzelnen Aggregaten der Systeme, d.h. zwischen den Ventilanordnungen, den Pumpen sowie den Reaktionseinrichtungen und den genannten Einheiten der Steuereinrichtung ST erfolgt über Steuer- und Meldeleitungen SL und ML. Zur Überwachung der Durchführung der einzelnen Funktionen kann eine z.B.

als Vergleicher ausgebildete Einrichtung B vorhanden sein, der die in den Eingabespeichern ES1 bis ESm und in den Ausgabespeichern AS1 bis ASm gespeicherten Informationen zugeführt werden.

Im folgenden wird nun die Wirkungsweise der Anordnung beschrieben.

Die über den gemeinsamen Datenweg von der zentralen Steuereinheit PR z.B. als 16-Bit-Wörter eintreffenden Informationen gelangen zunächst in die Adreßbewerter AD1 bis ADm. Dort findet eine Dekodierung statt, und es wird ein entsprechendes Auswahlkriterium A1 bis Am gebildet. Eine nachfolgend eintreffende Steuerinformation wird somit den dem ausgewählten System zugeordneten Funktionsdekodierer FD1 bis FDm zugeführt, dort dekodiert und in den betreffenden Eingabespeicher ES1 bis ESm gespeichert. In der zugeordneten Umsetzerschaltung U1 bis Um werden die Steuerinformationen in eine zur Steuerung der einzelnen Aggregate des ausgewählten Systems geeignete Form umgesetzt. Die auf diese Weise gebildeten Steuerkriterien SK gelangen über die Steuerleitungen SL an die einzelnen Aggregate des ausgewählten Systems. Derartige Steuerkriterien stellen eines oder mehrere der Ventile in der ausgewählten Ventilanordnung und damit die Zusammensetzung der mobilen Phase ein. Ein solches Steuerkriterium besteht z.B. aus einer Folge von Impulsen. Durch andere Steuerkriterien wird die ausgewählte Pumpe von externer auf interne Steuerung umgeschaltet, die Flußrate der betreffenden Punkte und bedarfsweise eines oder mehrere Pumpenventile eingestellt. Das Steuerkriterium, mit der eine Pumpe von interner auf externe Steuerung umgeschaltet wird, besteht z.B. aus einem Spannungssignal. Die Steuerung der Flußrate kann durch eine Rechteckimpulsfolge variabler Frequenz erfolgen. Zur Steuerung eines Pumpenventils können als Steuerkriterien Spannungssignale verschiedener Amplitude
verwendet werden. Weitere Steuerkriterien dienen zur Einstellung bestimmter Ablaufparameter, beispielsweise der
Temperatur, in der ausgewählten Reaktionseinrichtung. Ein
solches Steuerkriterium kann z.B. ein Signal bestimmter
Spannung sein. Umgekehrt stehen entsprechende Meldekriterien
MK zur Verfügung, die von den einzelnen Aggregaten des
ausgewählten Systems abgegeben und über die Meldeleitung ML
dem betreffenden Kodierer übergeben werden. Derartige
Meldekriterien MK geben z.B. die aktuelle Position eines
Ventils, den Druck in der Pumpe oder die Temperatur in einer
Reaktionseinrichtung an. Auch die Meldekriterien sind z.B.
Spannungssignale verschiedener Amplitude oder Impulsfolgen
variabler Frequenz. Diese Meldekriterien MK werden in den
Kodierern C1 bis Cm wiederum in Binärsignale umgesetzt und
im betreffenden Ausgabespeicher AS1 bis ASm gespeichert. Sie
stehen somit für einen Vergleich mit den in einem betreffenden Eingabespeicher ES1 bis ESm gespeicherten Informationen
zur Verfügung. Es ist damit möglich, die Durchführung eines
Ablaufvorganges bzw. die Einhaltung einer gewählten Steuergröße unmittelbar in der Steuereinrichtung ST zu überwachen.
Der Zugriff der zentralen Steuereinheit PR wird damit auf
die Übergabe von Adreß- und Befehlsinformationen reduziert.
Das bedeutet, daß eine größere Anzahl von Abläufen parallel
und unabhängig voneinander steuerbar ist, daß also eine
größere Anzahl von Systemen simultan gesteuert werden kann.
Die zentrale Steuereinheit PR kann aber auch mit einem
zusätzlichen Speicher z.B. in Form einer oder mehrerer
Disketten (sogenannter Floppy-Disc) ausgerüstet sein, wodurch die Speicherkapazität für die Ablaufbedingungen deutlich vergrößert wird. Weiterhin besteht die Möglichkeit,
die zentrale Steuereinheit PR parallel zur Steuerung und
Kontrolle der Systeme auch für eine numerische Auswertung
oder zur Entwicklung anderer Ablaufbedingungen einzusetzen.

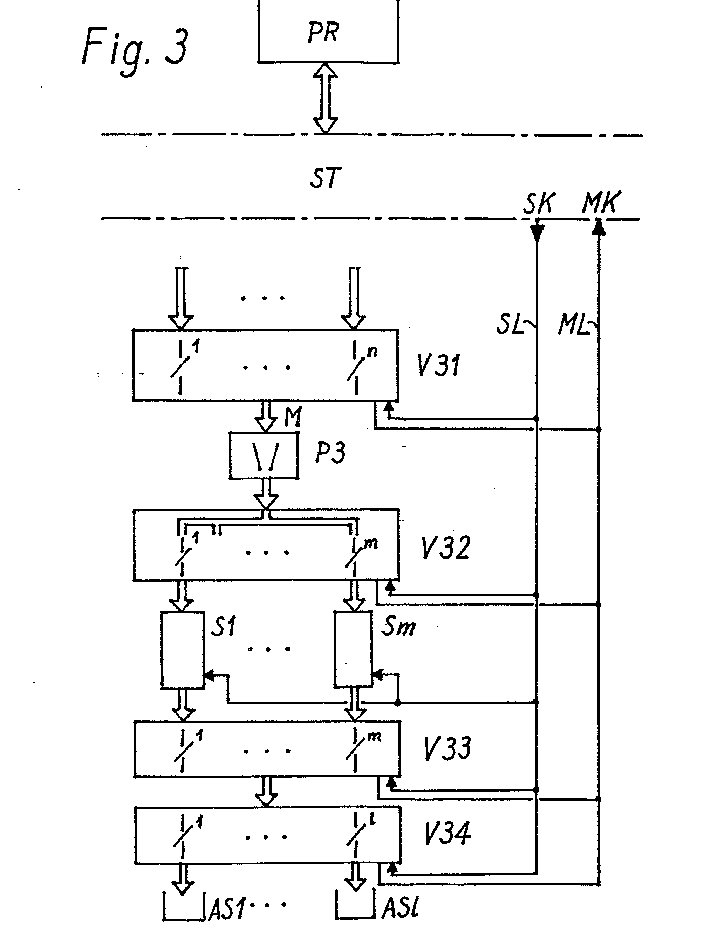

Im folgenden wird, unter Bezugnahme auf Fig. 3 die Funktion der Erfindung für einen Synthesevorgang beschrieben. Die Steuereinrichtung ST ist, wie anhand von Fig. 2 beschrieben, aufgebaut. Über die Steuerleitungen SL gelangen Steuerkriterien SK an die Aggregate eines ausgewählten Systems und über Meldeleitungen ML werden abgefragte Meldekriterien MK von den Aggregaten an die Steuereinrichtung ST übergeben.

In die Reaktionseinrichtungen S1 bis Sm gelangt die mobile Phase M über eine erste Ventilanordnung V31 mit im Beispiel n+Ventilen, über eine Pumpenanordnung P31 und über eine zweite Ventilanordnung V32 mit einer der Anzahl der Reaktionseinrichtungen entsprechenden Anzahl von Ventilen. Die Auswahl einer Reaktionseinrichtung S1 bis Sm geschieht durch die m Ventile der zweiten Ventilanordnung V32. Den Reaktionseinrichtungen S1 bis Sm ist eine dritte Ventilanordnung V33 nachgeordnet, deren m+Ventile stets gemeinsam mit den Ventilen der zweiten Ventilanordnung V32 betätigt werden. Über eine weitere Ventilanordnung V34 besteht die Möglichkeit, die mobile Phase in einzelne Auffangbehälter AS1 bis ASℓ zu leiten. Das Zielprodukt, z.B. ein Oligonukleotid entsteht hier jeweils in einer Reaktionseinrichtung, d.h. in einer Säule S1 bis Sm.

Unter der Annahme, daß z.B. durch das entsprechende Auswahlkriterium die Reaktionseinrichtung S1 bestimmt wird, werden über entsprechende, durch Decodierung der von der zentralen Steuereinheit PR übernommenen Informationen gebildeten Steuerkriterien SK das entsprechende Ventil in der Ventilanordnung V31 und die entsprechenden Ventile in den Ventilanordnungen V32 und V33 eingestellt. Die Pumpenanordnung P3 wird, falls erforderlich, auf interne Steuerung umgeschaltet, und die Pumpenparameter werden ebenfalls eingestellt. Weiterhin erhält die Reaktionseinrichtung S1 Steuerkriterien, die zur Einstellung der Bedingungen für den aktuellen Ablauf bzw. Ablaufschritt
notwendig sind. Meldekriterien werden von den einzelnen
Aggregaten wie beschrieben, über die Meldeleitungen ML
abgefragt.

Bei einem im vorhergehenden beschriebenen Synthesevorgang wird die mobile Phase M nicht kontinuierlich gefördert. Die Reaktionseinrichtungen Sl bis Sm werden vielmehr sozusagen jeweils beschickt, worauf dann in den Reaktionseinrichtungen eine Reaktion stattfindet. Da die
Beschickungszeit erheblich kürzer ist als die Reaktionszeit, kann die Pumpenanordnung P3 nacheinander eine Reihe
von Reaktionseinrichtungen bedienen. Das bedeutet, daß in
den m Reaktionseinrichtungen die Synthesevorgänge parallel durchgeführt werden. Im praktischen Betrieb können
z.B. bis zu 16 Oligonukleotide gleichzeitig hergestellt
werden.

Die Erfindung wurde anhand von Ausführungsbeispielen erläutert, bei denen jeweils die Reaktionseinrichtungen als
sog. Einzelsäulen realisiert sind. In Ausgestaltung der
Erfindung können die Reaktionseinrichtungen in einem für
alle Reaktionseinrichtungen gemeinsamen sog. Säulenofen
betrieben werden, dessen Temperatur in der beschriebenen
Weise durch Steuer- und Meldekriterien einstellbar und
regelbar ist.

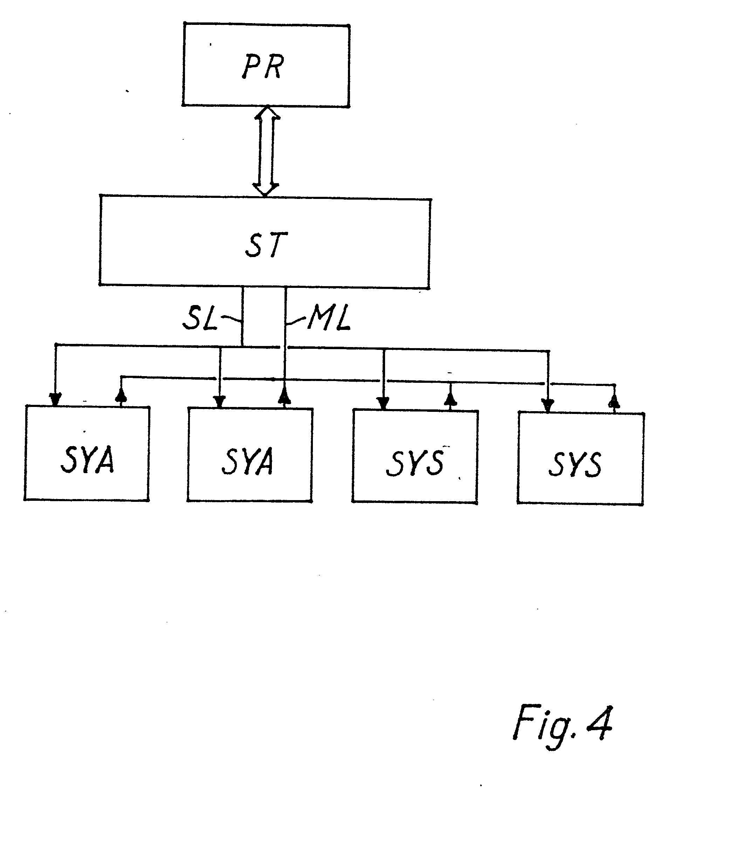

Eine Möglichkeit, eine Reihe von HPLC-Systemen in einer
den gewünschten Einsatzzwecken entsprechenden Weise zu
konfigurieren, zeigt Fig. 4. Von den dort dargestellten
Systemen sind zwei, nämlich die mit SYA bezeichneten Systeme, für einen Analyseprozess und zwei, nämlich die mit
SYS bezeichneten Systeme, für einen Syntheseprozess vorgesehen. Sowohl die Analyse- als auch die Syntheseprozesse laufen unter Steuerung der nur einmal vorgesehenen
zentralen Steuereinheit PR und des ebenfalls nur einmal

- 9 -

vorgesehenen Steuerteils ST simultan ab. Für die Prozesse werden im wesentlichen die gleichen externen Aggregate
(Reaktionseinrichtungen, Pumpen- und Ventilanordnungen)
verwendet. Der erforderliche Aufwand ist damit deutlich
reduziert.

**BOETERS, BAUER & PARTNER**
PATENTANWÄLTE
EUROPEAN PATENT ATTORNEYS

THOMAS-WIMMER-RING 14
D-8000 MÜNCHEN 22

PAe BOETERS, BAUER & PARTNER
THOMAS-WIMMER-RING 14, D-8000 MÜNCHEN 22

DIPL.-CHEM. DR. HANS D. BOETERS
DIPL.-ING. ROBERT BAUER
MÜNCHEN

DIPL.-ING. VINCENZ v. RAFFAY
DIPL.-CHEM. DR. THOMAS FLECK
HAMBURG

TELEFON: (089) 22 00 92
TELEX: 5 24 878 rrm
TELEGRAMME: PROVENTION, MÜNCHEN

Q158003

## Patentansprüche

1. Anordnung zur Durchführung chemischer Prozesse in sogenannten HPLC-Systemen mit säulenförmigen Reaktionseinrichtungen, denen über Ventil- und Pumpenanordnungen eine mobile Phase zugeführt wird, wobei die Zusammensetzung der mobilen Phase sowie die Einstellung der Parameter der Pumpenanordnung programmgesteuert erfolgt, d a d u r c h   g e k e n n z e i c h n e t , daß für eine Vielzahl von Systemen (SY1 bis SYm) eine gemeinsame Steuereinheit (PR) vorgesehen ist, die über eine Steuereinrichtung (ST) zu den einzelnen Systemen (SY1 bis SYm) Zugriff erhält, und daß die einzelnen Systeme als Analysesysteme (SYA) und/oder als Synthesesysteme (SYS) betrieben werden.

- 2 -

2. Anordnung nach Anspruch 1,

d a d u r c h   g e k e n n z e i c h n e t , daß die
Steuereinrichtung (ST) durch Bewertung der Informationen
der zentralen Steuereinheit (PR) Auswahlkriterien (A1 bis
Am) zur Ansteuerung der einzelnen Systeme (SY1 bis SYm),
sowie Steuerkriterien (SK) für die einzelnen Aggregate
(V,P,S) eines ausgewählten Systems (SY1 bis SYm) bildet
bzw. Meldekriterien (MK) von den einzelnen Aggregaten (V,
P,D) eines ausgewählten Systems (SY1 bis SYm) übernimmt,
und die Durchführung eines oder mehrerer Ablaufschritte
bzw. die Einhaltung einer Stellgröße überwacht.


3. Anordnung nach Anspruch 2,

d a d u r c h   g e k e n n z e i c h n e t ,
daß in der Steuereinrichtung (ST) in ankommender Richtung
ein Adreßbewerter (AD1 bis ADm) zur Bildung des Auswahlkriteriums (A1 bis Am), sowie für jedes System (SY1 bis SYm)
ein Funktionsdekodierer (FD1 bis DFm), ein Eingabespeicher
(ES1 bis ESm) und eine Umsetzerschaltung (U1 bis Um) und in
abgehender Richtung für jedes System (SY1 bis SYm) eine
Kodiereinrichtung (C1 bis Cm) und ein Ausgabespeicher (AS1
bis ASm) vorgesehen ist,
daß die Umsetzerschaltungen (U1 bis Um) die in binärer Form
aufgenommenen, in einem Eingabespeicher (ES1 bis ESm) gespeicherten Informationen in Steuerkriterien (SK) für die
einzelnen Aggregate eines ausgewählten Systems (SY1 bis SYm)
und die Kodiereinrichtungen (C1 bis Cm) die Meldekriterien
(MK) der einzelnen Aggregate eines ausgewählten Systems (SY1
bis SYm) in binäre Daten umsetzen, und
daß zur Überwachung die in den Eingabe- und in den Ausgabespeichern (ES1 bis ESm, AS1 bis ASm) gespeicherten Daten
bewertet werden.

4. **Anordnung** nach Anspruch 1 bis 3,
d a d u r c h   g e k e n n z e i c h n e t , daß für
ein Analysesystem jedes System (SY1 bis SYm) aus einer
Ventilanordnung (V1 bis Vm), einer Pumpenanordnung (P1
bis Pm), einer Reaktionseinrichtung (S1 bis Sm) und einer
Detektoreinrichtung (D1 bis Dm) besteht,
daß die einzelnen Aggregate (V1 bis Vm, P1 bis Pm, S1 bis
Sm, D1 bis Dm) jedes Systems über Steuerleitungen (SL)
mit der betreffenden Umsetzerschaltung (U1 bis Um) verbunden und über die dort gebildeten Steuerkriterien (SK)
einstellbar sind, und
daß die einzelnen Aggregate (V1 bis Vm, P1 bis Pm, D1 bis
Dm) jedes Systems über Meldeleitungen (ML) mit der betreffenden Codiereinrichtung (C1 bis Cm) verbunden sind.

5. **Anordnung** nach Anspruch 1 bis 3,
d a d u r c h   g e k e n n z e i c h n e t , daß für
ein Synthesesystem die Reaktionseinrichtungen (S1 bis Sm)
über eine erste Ventilanordnung (V31), eine Pumpenanordnung (P3) und eine zweite Ventilanordnung (V32) mit den
Zuführungen für die mobile Phase (M) verbunden sind,
daß den Reaktionseinrichtungen (S1 bis Sm) mindestens
eine dritte Ventilanordnung (V33) nachgeschaltet ist,
daß die einzelnen Aggregate (V31, P3, V32, V33, S1 bis
Sm) über Steuerleitungen (SL) mit der betreffenden Umsetzerschaltung (U1 bis Um) verbunden sind und über die
dort gebildeten Steuerkriterien (SK) einstellbar sind und
daß die einzelnen Aggregate (V31, P3, V32, V33, S1 bis
Sm) über Meldeleitungen (ML) mit der betreffenden Codiereinrichtung (C1 bis Cm) verbunden sind.

0158003

6. Anordnung nach Anspruch 5,
d a d u r c h  g e k e n n z e i c h n e t , daß die
Ventile der zweiten und der dritten Ventilanordnung (V32,
V33) gemeinsam eingestellt werden.

7. Anordnung nach Anspruch 5 und 6,
d a d u r c h  g e k e n n z e i c h n e t , daß die
Zeitdauer für die Zuführung der mobilen Phase (M) in eine
ausgewählte Reaktionseinrichtung (S1 bis Sm) kurz ist gegenüber der Reaktionszeit in der Reaktionseinrichtung.

8. Anordnung nach Anspruch 5,
d a d u r c h  g e k e n n z e i c h n e t , daß zum
Anschluß von Auffangbehältern (AS1 bis AS1) eine der
dritten Ventilanordnung (V33) nachgeordnete weitere Ventilanordnung (V34) vorgesehen ist und deren Ventile über
die Steuereinrichtung (ST) einstellbar sind.

9. Anordnung nach einem der Ansprüche 1 bis 8,
d a d u r c h  g e k e n n z e i c h n e t , daß die
Reaktionseinrichtungen (S1 bis Sm) in einem gemeinsamen
Säulenofen betrieben werden, dessen Temperatur über Steuer- und Meldekriterien (SK, MK) einstellbar und überwachbar sind.

*Fig. 1*

Fig. 2

Fig. 3

Fig. 4

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 364 263 (V.L. SANKOORIKAL) * Das ganze Dokument * | 1 | G 01 N 30/36 |
| A | FR-A-2 386 342 (POLITECHNIKA GDANSKA) * Patentansprüche; Figur 1 * | 1 | |
| A | DE-A-2 821 005 (VARIAN ASSOCIATES) * Patentansprüche * | 1 | |
| A | US-A-3 985 021 (P.Y. ACHENER) * Patentansprüche * | 1 | |
| A | INTERNATIONAL LABORATORY, Mai/Juni 1979, Seiten 95-106; R. FINCHER et al.: "Microprocessor-controlled HPLC" * Das ganze Dokument * | 1 | RECHERCHIERTE SACHGEBIETE (Int. Cl.4) G 01 N 30/36 |

Der vorliegende Recherchenbericht wurde für alle Patentansprüche erstellt.

| Recherchenort DEN HAAG | Abschlußdatum der Recherche 24-05-1985 | Prüfer CALLEWAERT-HAEZEBROU |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82